# FASCICULE DE BREVET EUROPEEN

(11) **EP 3 680 510 B1**
(45) Date de publication et mention de la délivrance du brevet: **13.09.2023**
(21) Numéro de dépôt: 19214008.5
(22) Date de dépôt: 06.12.2019
(51) Int. Cl.: F16F 13/06, B64C 27/51

(54) **AMORTISSEUR HYDROÉLASTIQUE, ROTOR COMPORTANT UN TEL AMORTISSEUR HYDROÉLASTIQUE ET AÉRONEF ASSOCIÉ**
HYDROELASTISCHER DÄMPFER, ROTOR MIT EINEM SOLCHEN HYDROELASTISCHEN DÄMPFER UND ZUGEHÖRIGES FLUGZEUG
HYDROELASTIC DAMPER, ROTOR COMPRISING SUCH A HYDROELASTIC DAMPER AND ASSOCIATED AIRCRAFT

(30) Priorité: 19.12.2018 FR 1873293
(43) Date de publication de la demande: 15.07.2020
(73) Titulaire: Airbus Helicopters, 13725 Marignane Cedex (FR)
(72) Inventeur: BIHEL, Jean-Romain, 13740 LE ROVE (FR); SEQUERA, Damien, 41089 DOS HERMANAS (ES); JALAGUIER, Jean-Pierre, 13127 VITROLLES (FR); GREGORCZYK, Wojciech, 91341 LODZ (PL)
(74) Mandataire: GPI & Associés

(56) Documents cités:
- EP-A1- 0 490 724
- FR-A1- 2 835 506
- GB-A- 1 054 896

## Description

La présente invention a pour objet un amortisseur hydroélastique, un rotor d'aéronef et un aéronef comprenant au moins un amortisseur hydroélastique de ce type.

L'invention se rapporte au domaine technique général de l'amortissement des mouvements d'un système mécanique et plus particulièrement des équipements comportant des systèmes d'amortissement utilisés dans l'aéronautique.

L'invention trouve son application tout particulièrement dans des amortisseurs de traînée utilisés sur un rotor de sustentation de giravion, et notamment d'un hélicoptère. L'invention se situe dès lors dans le domaine technique restreint des amortisseurs de traînée aérodynamique.

Sur un rotor d'hélicoptère, un dispositif d'amortissement peut relier chaque pale ou moyen de fixation de pale au moyeu du rotor ou peut relier deux pales ou moyens de fixation de pales adjacentes entre eux. Un tel dispositif d'amortissement est notamment connu sous l'expression « amortisseur de traînée » ou parfois « adaptateur de fréquences à amortissement incorporé ».

Un dispositif d'amortissement connu peut présenter des organes de rappel élastiques ayant un matériau en élastomère.

Le document FR 2 950 027 présente un dispositif comprenant plusieurs blocs d'élastomère.

Le document CN 102501970 décrit aussi un système muni d'une pluralité de blocs d'élastomère.

Un autre type de dispositif d'amortissement dit « mixte » peut être utilisé. Un dispositif d'amortissement mixte prend la forme d'un amortisseur hydroélastique qui est muni d'un organe élastique et d'un système hydraulique montés en parallèle.

Les documents FR 2 736 890 et FR 3 040 042 décrivent un dispositif d'amortissement de ce type.

Le document EP 1 000 274 présente un amortisseur hydroélastique.

Le document US 2013/0164131 décrit aussi un amortisseur hydroélastique. Un premier anneau ayant un matériau en élastomère s'étend radialement entre une armature intermédiaire et une armature centrale, et un deuxième anneau ayant un matériau en élastomère s'étend radialement entre une armature intermédiaire et une armature externe.

Le document EP 2 678 222 décrit un amortisseur hydroélastique muni d'un premier organe de liaison solidaire d'un système hydraulique. Un deuxième organe de liaison est solidaire d'une armature, un organe élastique étant interposé entre l'armature et le système hydraulique. L'organe de liaison et le système hydraulique fonctionnent en série suite à un déplacement du premier organe de liaison par rapport au deuxième organe de liaison, à savoir l'un après l'autre.

Les documents WO 2012/148389 et WO 2013/152300 sont aussi connus.

Cependant lorsque les extrémités de ces différents amortisseurs hydroélastiques sont solidarisées à deux pales adjacentes par exemple, la force centrifuge générée par la rotation du rotor peut provoquer une usure prématurée au niveau de paliers de guidage et de joints. En effet, ces paliers et joints sont sollicités radialement par rapport à un axe longitudinal de l'amortisseur hydroélastique.

Le document EP 0 490 724 décrit quant à lui une attache hydroélastique de suspension de roues, de moteur de véhicules ou de suspension de machines à poste fixe.

Une telle attache hydroélastique peut notamment comporter un premier et un second organes de liaison pour la relier mécaniquement avec deux organes mécaniques tels que par exemple la tige d'un amortisseur et le châssis d'un véhicule.

En outre, un tel document EP 0 490 724 divulgue également qu'une cartouche hydraulique peut présenter deux degrés de mobilité par rapport à un manchon. En effet, une couche en composition élastomérique, sensiblement conique, forme une pièce de fixation élastique (3) permettant des basculements de la tige d'amortissement (2) entre les limites des axes (A) et (B). De plus, une butée de détente (13) limite les mouvements de translation de la tige d'amortisseur (2) par rapport au châssis (4) du véhicule et par suite un risque de traction exagérée de la pièce de fixation élastique (3).

Dés lors une telle cartouche hydraulique peut se déplacer en rotation et en translation par rapport au manchon (5) solidaire du châssis (4).

Cependant, le document EP 0 490 724 ne divulgue pas un fourreau permettant de recouvrir la cartouche hydraulique ni que l'organe élastique comporte un moyen élastique interposé entre une extrémité de la tige et une extrémité du fourreau.

Les documents FR 2 835 506 et GB 1 054 896 décrivent quant à eux d'autres moyens hydroélastiques.

La présente invention a alors pour objet de proposer un amortisseur hydroélastique muni d'un organe élastique et d'un système hydraulique innovant afin d'optimiser sa durée de vie notamment en présence des sollicitations dynamiques générées par la force centrifuge lors de la rotation d'un rotor d'aéronef.

L'invention concerne donc un amortisseur hydroélastique muni d'un premier organe de liaison et d'un second organe de liaison aptes à relier mécaniquement l'amortisseur hydroélastique respectivement à un premier organe mécanique et à un second organe mécanique, l'amortisseur hydroélastique comportant un organe élastique et un système hydraulique, le système hydraulique comportant une cartouche hydraulique logeant un fluide hydraulique et un piston solidaire d'une tige mobile en translation par rapport à la cartouche hydraulique, la tige s'étendant longitudinalement d'une première extrémité à une seconde extrémité le long d'un axe longitudinal, la première extrémité étant solidarisée avec le premier organe de liaison et la seconde extrémité émergeant de la cartouche hydraulique, la cartouche hydraulique présentant en tout ou partie au moins deux degrés de mobilité par rapport à un manchon solidaire du second organe de liaison, les au moins deux degrés de mobilité comportant au moins un degré de mobilité en translation et au moins un degré de mobilité en rotation.

Selon l'invention, un tel amortisseur hydroélastique est remarquable en ce qu'il comporte un fourreau présentant une première extrémité solidaire du manchon, le fourreau étant agencé en recouvrement de la cartouche hydraulique et en ce que l'organe élastique comporte d'une part un premier moyen élastique interposé entre la seconde extrémité de la tige et le second organe de liaison et d'autre part un second moyen élastique interposé entre la première extrémité de la tige et une seconde extrémité du fourreau.

Autrement dit, les au moins deux degrés de mobilité de tout ou partie de la cartouche hydraulique par rapport au manchon permettent à la cartouche de suivre les déplacements de la tige sollicitée par une force radiale centrifuge.

En effet, une telle force centrifuge a pour effet de faire pivoter, dans un premier sens de rotation, la tige et le premier organe de liaison par rapport au premier organe mécanique et, dans un deuxième sens de rotation opposé au premier de rotation, le manchon et le second organe de liaison par rapport au second organe mécanique. Il en résulte alors également potentiellement une déformation en flexion de la tige.

Grâce aux au moins deux degrés de mobilité de tout ou partie de la cartouche hydraulique par rapport au manchon, la cartouche hydraulique, ou seulement une partie de la cartouche, est donc libre de suivre les mouvements de rotation selon le premier sens de rotation de la tige et du premier organe de liaison par rapport au premier organe mécanique. Par suite, les joints et paliers de la cartouche hydraulique travaillent normalement et ne sont pas endommagés par la déformation éventuelle de la tige.

Par ailleurs, le(s) degré(s) de mobilité en translation est (sont) orienté(s) au moins dans un plan XOZ formé par un axe OZ coaxial à la force centrifuge et par l'axe longitudinal OX de l'amortisseur hydroélastique. Le(s) degré(s) de mobilité en rotation est (sont) agencé(s) au moins autour d'un axe de rotation parallèle à un axe OY perpendiculaire au plan XOZ.

En outre, le premier moyen élastique et le second moyen élastique peuvent respectivement comporter une bague en matériau élastomère. Un tel matériau élastomère peut également être solidarisé avec une armature interne métallique solidaire de la tige et une armature externe métallique solidaire du manchon ou de toute autre pièce solidaire du second organe de liaison dans le cas du premier moyen élastique et du fourreau dans le cas du second moyen élastique. Ces premier et second moyens élastiques sont généralement désignés par l'expression "silentbloc" ou "silent bloc" formant un organe monolithique et souple.

Par ailleurs, le fourreau peut présenter une forme sensiblement tubulaire et permet à la fois de protéger la cartouche hydraulique de l'environnement extérieur et notamment de l'eau et/ou de la poussière et d'interposer le second moyen élastique entre la tige et le fourreau solidaire du manchon et donc du second organe de liaison. Au niveau de la seconde extrémité du fourreau un capot peut être monté amovible et peut permettre de maintenir en position une face cylindrique externe du second moyen élastique.

Avantageusement, l'amortisseur hydroélastique peut comporter des moyens de butée aptes à empêcher un mouvement relatif de translation pure suivant uniquement l'axe longitudinal entre tout ou partie de la cartouche hydraulique et le manchon.

De tels moyens de butée permettent alors de maintenir en position la cartouche hydraulique, ou une partie de la cartouche, par rapport au manchon lorsqu'aucun mouvement relatif de rotation n'est réalisé simultanément entre ces deux éléments.

En outre, comme précédemment pour le premier moyen élastique, le second moyen élastique peut comporter une bague en matériau élastomère et est généralement désigné par l'expression "silentbloc". Le second moyen élastique forme ainsi un organe monolithique et souple.

Selon un exemple avantageux de l'invention, l'amortisseur hydroélastique peut présenter un interstice séparant la cartouche hydraulique du fourreau, l'interstice étant rempli avec une huile.

Un tel agencement permet alors d'externaliser l'étanchéité à l'huile de la cartouche hydraulique au niveau d'un volume délimité par le fourreau et la tige En outre dans ce cas, il n'est alors éventuellement pas nécessaire de rapporter des joints d'étanchéité au niveau de la liaison entre la tige et la cartouche hydraulique.

Selon un premier mode de réalisation de l'invention, la cartouche hydraulique peut présenter une structure rigide indéformable comportant une chemise et une paroi de fermeture agencée au niveau d'une première extrémité de la chemise, la chemise comportant une face interne cylindrique coopérant avec le piston solidaire de la tige. En effet, un tel piston comporte une face externe cylindrique agencée à l'intérieur de la chemise en étant apte à coulisser de manière étanche en regard de la face interne cylindrique de la chemise.

Ainsi, selon ce premier mode de réalisation, la structure rigide formant la cartouche hydraulique présente les au moins deux degrés de mobilité par rapport au manchon. Toute la cartouche hydraulique est alors apte à se déplacer selon au moins un mouvement de translation et au moins un mouvement de rotation par rapport au manchon. La cartouche hydraulique peut alors suivre librement les déplacements en rotation de la tige et du premier organe de liaison par rapport au premier organe mécanique. De cette manière les joints et les paliers de la cartouche hydraulique ne sont pas déformés, voire endommagés prématurément.

Dans ce cas, la structure rigide indéformable peut comporter un couvercle de fermeture agencé au niveau d'une seconde extrémité de la chemise.

Un tel couvercle de fermeture est alors amovible pour permettre l'introduction du piston en regard de la face interne cylindrique de la chemise puis l'introduction d'une huile à l'intérieur de la cartouche. Une fois le piston positionné dans la chemise et l'huile introduite dans la cartouche, le couvercle de fermeture peut être rapporté et solidarisé avec la chemise au niveau de la seconde extrémité de celle-ci.

Selon un premier exemple du premier mode de réalisation de l'invention, l'amortisseur hydroélastique peut comporter au moins une biellette présentant une première liaison à un degré de liberté en rotation avec le manchon suivant un premier axe de rotation et une seconde liaison à un degré de liberté en rotation avec la cartouche hydraulique suivant un second axe de rotation, les premier et second axes de rotation étant parallèles entre eux et perpendiculaires à l'axe longitudinal.

En d'autres termes, la (ou les) biellette(s) est (sont) libre(s) de pivoter d'une part par rapport au manchon autour du premier axe de rotation et d'autre part par rapport à la cartouche hydraulique autour du second axe de rotation. En outre pour réduire les frottements au niveau de ces deux liaisons pivots, il est également envisagé d'interposer des roulements par exemple à aiguilles ou tout type de paliers de guidage tels que des bagues formées dans un matériau à faible coefficient de frottement tel que du bronze ou du polytétrafluoroéthylène (PTFE).

La (ou les) biellette(s) permet(tent) en effet à la cartouche hydraulique d'être mobile en rotation et en translation par rapport au manchon. La cartouche hydraulique, formant un ensemble monolithique, est donc libre de suivre les mouvements de rotation de la tige et du premier organe de liaison par rapport au premier organe mécanique.

Avantageusement, les biellettes comportent une première biellette et une seconde biellette agencées de façon diamétralement opposées de part et d'autre de la tige, le premier axe de rotation de la première biellette étant confondu avec le premier axe de rotation de la seconde biellette et le second axe de rotation de la première biellette étant confondu avec le second axe de rotation de la seconde biellette.

Une telle utilisation de deux biellettes réparties de façon diamétralement opposées permet en effet de garantir un équilibrage dynamique de l'amortisseur hydroélastique dans toutes les directions de l'espace.

Selon un second exemple du premier mode de réalisation de l'invention, l'amortisseur hydroélastique peut comporter au moins un bloc élastomérique cylindrique, le(s) bloc(s) élastomérique(s) cylindrique(s) comportant un premier bloc élastomérique cylindrique présentant une première portion cylindrique d'extrémité solidarisée avec la première extrémité du fourreau et une seconde portion cylindrique d'extrémité solidarisée à une première face d'extrémité de la cartouche hydraulique, le premier bloc élastomérique cylindrique s'étendant longitudinalement entre la première portion cylindrique d'extrémité et la seconde portion cylindrique d'extrémité le long de l'axe longitudinal.

Autrement dit, le(s) bloc(s) élastomérique(s) cylindrique(s) permettent, en se déformant élastiquement, de conférer à la cartouche hydraulique les au moins deux degrés de mobilité par rapport au fourreau et donc par rapport au manchon.

En pratique, le(s) bloc(s) élastomérique(s) cylindrique(s) peu(ven)t comporter un second bloc élastomérique cylindrique comportant une troisième portion cylindrique d'extrémité solidarisée avec une seconde extrémité du fourreau et une quatrième portion cylindrique d'extrémité solidarisée à une seconde face d'extrémité de la cartouche hydraulique, le second bloc élastomérique cylindrique s'étendant longitudinalement entre la troisième portion cylindrique d'extrémité et la quatrième portion cylindrique d'extrémité le long de l'axe longitudinal.

Ainsi, un tel fourreau permet d'une part d'agencer sensiblement coaxialement le premier et le second blocs élastomères suivant l'axe longitudinal et d'autre part de maintenir le second moyen élastique interposé entre la première extrémité de la tige et la seconde extrémité du fourreau.

Avantageusement, le(s) bloc(s) élastomérique(s) cylindrique(s) peu(ven)t être de type lamifié en comportant une pluralité de plaques agencées parallèlement dans des plans perpendiculaires à l'axe longitudinal, les plaques étant séparées les unes des autres par un matériau en élastomère.

Le(s) bloc(s) élastomérique(s) cylindrique(s) est (sont) alors très raide(s) axialement suivant l'axe longitudinal et comparativement très souple(s) et élastique(s) lors de sollicitations en cisaillement et donc radialement par rapport à l'axe longitudinal.

Selon un second mode de réalisation de l'invention, la cartouche hydraulique peut présenter une structure déformable comportant une chemise flottante, un premier bouchon agencé au niveau d'une première extrémité de la chemise flottante et un second bouchon agencé au niveau d'une seconde extrémité de la chemise flottante, la chemise flottante étant mobile respectivement par rapport au premier bouchon et par rapport au second bouchon, le premier bouchon étant solidarisé avec le manchon, la chemise flottante présentant les au moins deux degrés de mobilité par rapport au manchon, la chemise flottante comportant une face interne cylindrique coopérant avec le piston solidaire de la tige.

Dans ce cas, juste une partie de la cartouche hydraulique, la chemise flottante, est mobile suivant les au moins deux degrés de mobilité par rapport au premier bouchon et donc par rapport au manchon. La chemise flottante peut par exemple comporter quatre degrés de mobilité, à savoir un degré de mobilité en translation et trois degrés de mobilité en rotation, par rapport au premier bouchon. Un tel agencement correspond alors à une liaison mécanique de type linéaire annulaire entre la chemise flottante et le manchon.

Par ailleurs, un tel premier bouchon peut permettre d'une part de réaliser la liaison mécanique de type linéaire annulaire d'une partie de la cartouche hydraulique par rapport au manchon et d'autre part d'interposer un premier moyen élastique entre la seconde extrémité de la tige et un alésage ménagé dans le premier bouchon.

En outre, la chemise flottante est également mobile suivant au moins deux degrés de mobilité par rapport au second bouchon. Comme précédemment par rapport au premier bouchon, la chemise flottante peut par exemple comporter quatre degrés de mobilité, à savoir un degré de mobilité en translation et trois degrés de mobilité en rotation, par rapport au second bouchon. Un tel agencement correspond alors à une liaison mécanique de type linéaire annulaire entre la chemise flottante et le second bouchon.

Par ailleurs, un tel second bouchon peut permettre d'une part de réaliser la liaison mécanique de type linéaire annulaire entre la chemise flottante et le second bouchon et d'autre part de former une seconde extrémité d'un fourreau.

Comme précédemment évoqué, l'organe élastique peut comporter un second moyen élastique et un fourreau agencé en recouvrement de la cartouche hydraulique.

Le second bouchon peut alors permettre d'interposer un second moyen élastique entre la seconde extrémité de la tige et un alésage ménagé dans le second bouchon.

Avantageusement, l'amortisseur hydroélastique peut comporter deux bagues flottantes agencées coaxialement sur l'axe longitudinal de part et d'autre du piston, une première bague flottante étant interposée entre la tige et le premier bouchon, une seconde bague flottante étant interposée entre la tige et le second bouchon.

De telles bagues flottantes sont donc configurées de manière à suivre les déplacements de la tige et du piston et permettent de garantir une étanchéité de la cartouche hydraulique au niveau de leur jonctions respectives avec les deux bouchons tout en préservant l'intégrité des joints présents à ces jonctions.

L'invention concerne également un rotor pour réaliser une propulsion, voire une sustentation, d'un aéronef dans les airs.

Selon l'invention, un tel rotor est remarquable en ce qu'il comporte au moins un amortisseur hydroélastique tel que décrit précédemment.

Ainsi, un rotor conforme à l'invention peut comporter une durée de vie optimale en permettant par exemple de réduire les opérations de maintenance au niveau de son (ou ses) amortisseur(s) hydroélastique(s).

L'invention se rapporte également à un aéronef qui est remarquable en qu'il comporte au moins un rotor tel que décrit ci-dessus pour réaliser une propulsion, voire une sustentation, de l'aéronef dans les airs.

Autrement dit, un aéronef selon l'invention peut présenter des coûts liés à son utilisation et sa maintenance sensiblement réduits.

L'invention et ses avantages apparaîtront avec plus de détails dans le cadre de la description qui suit avec des exemples donnés à titre illustratif en référence aux figures annexées qui représentent :
[Fig 1] - la figure 1, une vue en perspective d'un aéronef conforme à l'invention,
[Fig 2] - la figure 2, une vue en perspective d'un rotor d'aéronef conforme à l'invention,
[Fig 3] - la figure 3 une vue en coupe longitudinale d'un premier exemple de réalisation d'un amortisseur hydroélastique conforme à l'invention,
[Fig 4] - la figure 4 une vue partielle en perspective du premier exemple de réalisation d'amortisseur hydroélastique conforme à l'invention,
[Fig 5] - la figure 5 une vue en coupe longitudinale d'un second exemple de réalisation d'un amortisseur hydroélastique conforme à l'invention,
[Fig 6] - la figure 6 une vue en coupe longitudinale d'un troisième exemple de réalisation d'un amortisseur hydroélastique conforme à l'invention, et
[Fig 7] - la figure 7 une vue en coupe longitudinale d'un quatrième exemple de réalisation d'un amortisseur hydroélastique conforme à l'invention.

Les éléments présents dans plusieurs figures distinctes peuvent être affectés d'une seule et même référence.

Comme déjà indiqué, l'invention concerne notamment un aéronef et un rotor équipant un tel aéronef.

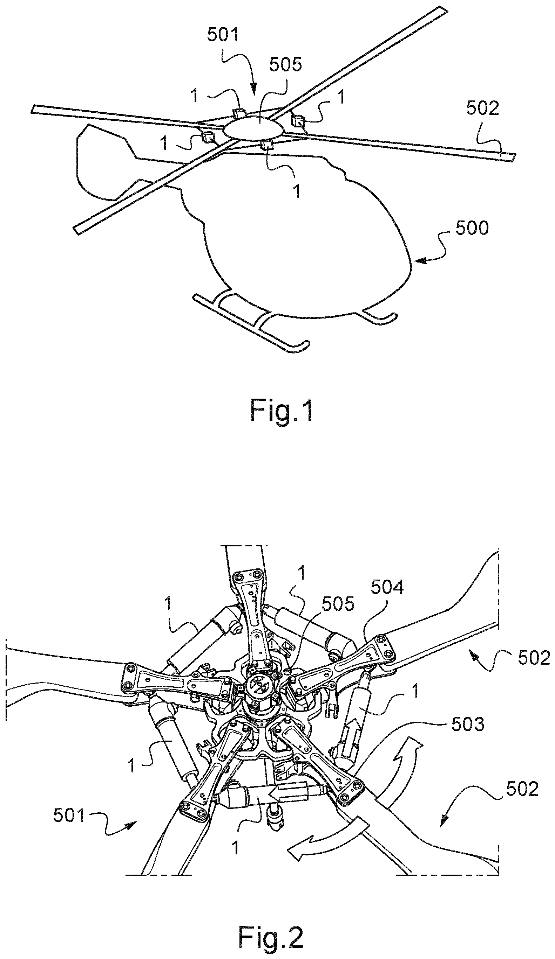

Tel que représenté à la figure 1, un aéronef 500 comporte ainsi un rotor 501 permettant de réaliser au moins une propulsion, voire également la sustentation, de l'aéronef 500 dans les airs. Un tel rotor 501 comporte une pluralité de pales 502 attachées à un moyeu central 505.

Telles que représentées, les différentes pales 502 peuvent alors être reliées entre elles par des amortisseurs hydroélastiques 1 formant des amortisseurs de traînée aérodynamique.

Tel que représenté à la figure 2, chaque amortisseur hydroélastique 1 du rotor 501 comporte deux extrémités respectivement solidarisées avec un premier organe mécanique 503 et un second organe mécanique 504 reliant respectivement chacun une pale 502 au moyeu 505 du rotor 501.

En outre, un tel premier organe mécanique 503 et un tel second organe mécanique 504 sont alors agencés successivement côte à côte. Alternativement, les amortisseurs hydroélastiques 1 peuvent également être directement reliés à deux pales successives d'un rotor.

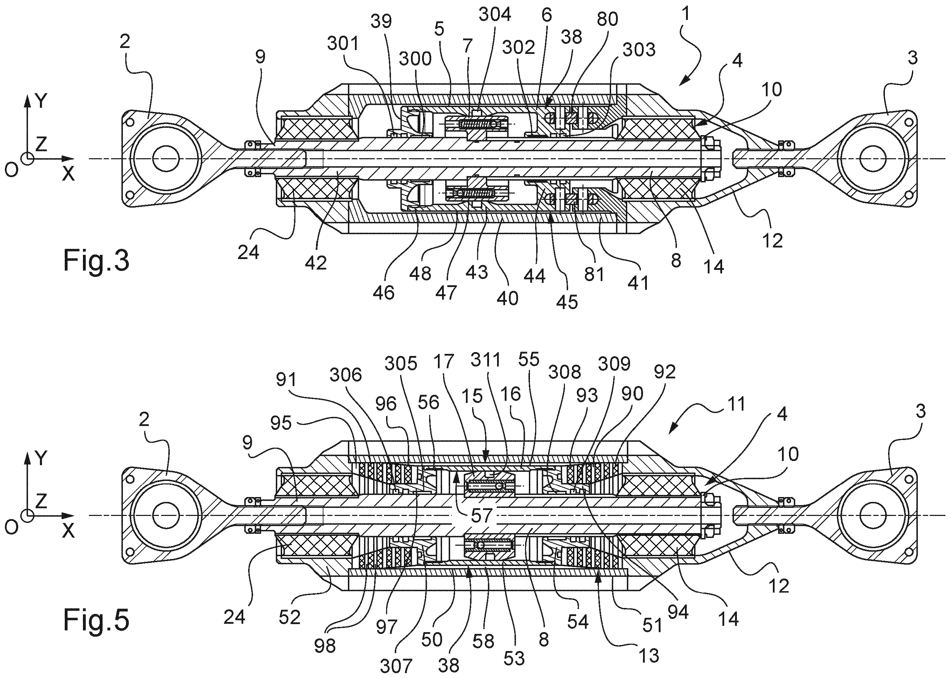

Selon différents exemples de réalisations de l'invention représentés aux figures 3 à 7, l'amortisseur hydroélastique 1, 11, 21, 31 est muni d'un premier organe de liaison 2, 32 et d'un second organe de liaison 3 aptes à relier mécaniquement cet amortisseur hydroélastique 1, 11, 21, 31 respectivement au premier organe mécanique 503 et au second organe mécanique 504 par exemple.

Par ailleurs, l'amortisseur hydroélastique 1, 11, 21, 31 comporte un organe élastique 4 et un système hydraulique 5, 15, 25, 35 comportant une cartouche hydraulique 6, 16, 26, 36 à l'intérieur de laquelle un fluide hydraulique peut se déplacer de part et d'autre d'un piston 7, 17, 27, 37 par exemple via un ou plusieurs orifices de laminage du piston, un ou plusieurs clapets présentant des moyens de tarages. En outre, un tel piston 7, 17, 27, 37 est solidarisé avec une tige 8, 18 mobile en translation par rapport à la cartouche hydraulique 6, 16, 26, 36.

Une telle tige 8, 18 s'étend longitudinalement entre une première extrémité 9, 19 de la tige 8, 18 et une seconde extrémité 10, 20 de la tige 8, 18 le long d'un axe longitudinal OX. Par ailleurs, la première extrémité 9, 19 est solidaire du premier organe de liaison 2, 32 et la seconde extrémité 10, 20 émerge de la cartouche hydraulique 6, 16, 26, 36.

Tel que représenté à la figure 3 selon un premier exemple de réalisation de l'amortisseur hydroélastique 1, l'organe élastique 4 peut comporter au moins un premier moyen élastique 14 interposé entre la seconde extrémité 10 de la tige 8 et un manchon 12 solidaire du second organe de liaison 3. De plus, la cartouche hydraulique 6 peut présenter une structure rigide indéformable 38 comportant une chemise 43 et une paroi de fermeture 44 agencée au niveau d'une première extrémité 45 de la chemise 43. Cette chemise 43 comporte une face interne cylindrique 47 coopérant avec le piston 7 solidaire de la tige 8.

De plus, la structure rigide indéformable 38 comporte avantageusement un couvercle de fermeture 39 agencé au niveau d'une seconde extrémité 46 de la chemise 43.

Une telle cartouche hydraulique 6 présente alors au moins deux degrés de mobilité par rapport au manchon 12, ces degrés de mobilité comportant au moins un degré de mobilité en translation dans le plan XOZ et au moins un degré de mobilité en rotation selon un axe parallèle à l'axe OY.

En outre, un palier 300 et un ou plusieurs joints d'étanchéité dynamique 301 peuvent être interposés entre le couvercle de fermeture 39 et la tige 8. De même, un palier 302 et un ou plusieurs joints d'étanchéité dynamique 303 peuvent également être interposés entre la paroi de fermeture 44 et la tige 8. Un joint d'étanchéité dynamique 304 est quant à lui interposé entre le piston 7 et la face interne cylindrique 47 de la chemise 43.

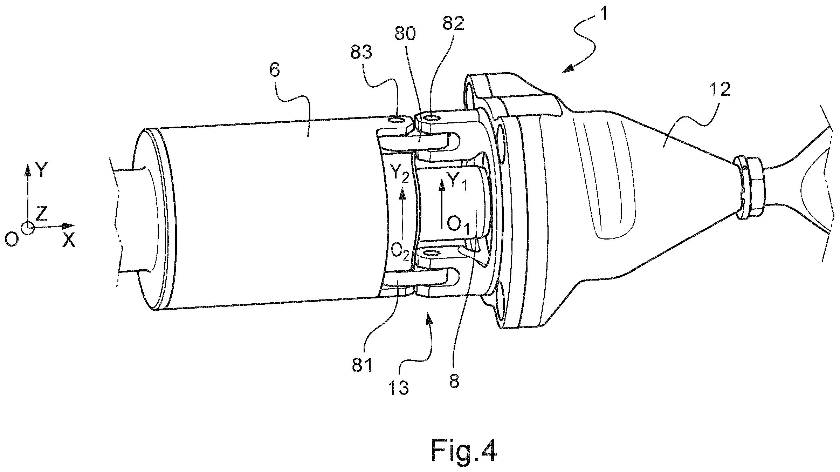

Tel que représenté à la figure 4, l'amortisseur hydroélastique 1 peut comporter des moyens de butée 13 aptes à empêcher un mouvement relatif de translation pure suivant uniquement l'axe longitudinal OX entre la cartouche hydraulique 6 et le manchon 12.

Selon ce premier exemple de réalisation de l'invention l'amortisseur hydroélastique 1 peut comporter également un fourreau 40 présentant une première extrémité 41 solidaire du manchon 12. Un tel fourreau 40 comporte une forme sensiblement tubulaire et est agencé en recouvrement de la cartouche hydraulique 6.

En outre, l'organe élastique 4 peut comporter également un second moyen élastique 24 interposé entre la première extrémité 9 de la tige 8 et une seconde extrémité 42 du fourreau 40.

Tel que représenté, l'amortisseur hydroélastique 1 peut alors présenter un interstice 48 séparant la cartouche hydraulique 6 du fourreau 40. En pratique, l'interstice 48 peut être rempli avec une huile de manière à externaliser l'étanchéité à l'huile en dehors de la cartouche hydraulique 6. En outre, l'interstice 48 peut ainsi être rendu étanche avec des joints d'étanchéité statique beaucoup plus robustes dans le temps qu'avec des joints d'étanchéité dynamique.

Par ailleurs, un tel amortisseur hydroélastique 1 peut comporter au moins une biellette 80, 81 permettant à la fois de former les moyens de butée 13 et de conférer à la cartouche hydraulique 6 les deux degrés de mobilité par rapport au manchon 12.

Plus précisément, chaque biellette 80, 81 peut comporter une première liaison 82 à un degré de liberté en rotation avec le manchon 12 suivant un premier axe de rotation O1Y1 et une seconde liaison 83 à un degré de liberté en rotation avec la cartouche hydraulique 6 suivant un second axe de rotation O2Y2, lesdits premier et second axes de rotation O1Y1, O2Y2 étant parallèles entre eux et perpendiculaires audit axe longitudinal OX.

Selon un second exemple de réalisation de l'invention tel que représenté à la figure 5, l'amortisseur hydroélastique 11 peut comporter un fourreau 50 présentant une première extrémité 51 solidaire du manchon 12 et au moins un bloc élastomérique cylindrique 90, 91. Un premier bloc élastomérique cylindrique 90 peut présenter une première portion cylindrique d'extrémité 92 solidarisée avec la première extrémité 51 du fourreau 50 et une seconde portion cylindrique d'extrémité 93 solidarisée à une première face d'extrémité 94 de la cartouche hydraulique 16.

Ainsi, un tel premier bloc élastomérique cylindrique 90 s'étend longitudinalement entre la première portion cylindrique d'extrémité 92 et la seconde portion cylindrique d'extrémité 93 le long de l'axe longitudinal OX.

Par ailleurs comme précédemment, un second moyen élastique 24 peut être interposé entre la première extrémité 9 de la tige 8 et une seconde extrémité 52 du fourreau 50. Un second bloc élastomérique cylindrique 91 peut quant à lui comporter une troisième portion cylindrique d'extrémité 95 solidarisée avec la seconde extrémité 52 du fourreau 50 et une quatrième portion cylindrique d'extrémité 96 solidarisée à une seconde face d'extrémité 97 de la cartouche hydraulique 16.

De même, un tel second bloc élastomérique cylindrique 91 s'étend alors longitudinalement entre la troisième portion cylindrique d'extrémité 95 et la quatrième portion cylindrique d'extrémité 96 le long de l'axe longitudinal OX.

En outre, le(s) bloc(s) élastomérique(s) cylindrique(s) 90, 91 peu(ven)t être de type lamifié comportant une pluralité de plaques 98 agencées parallèlement entre elles et au plan YOZ. De telles plaques 98 peuvent être réalisées dans un matériau métallique et être séparées les unes des autres par un matériau élastomère.

De plus, la cartouche hydraulique 16 peut présenter une structure rigide indéformable 38 comportant une chemise 53 et une paroi de fermeture 54 agencée au niveau d'une première extrémité 55 de la chemise 53. Cette chemise 53 comporte une face interne cylindrique 57 coopérant avec le piston 17 solidaire de la tige 8.

De plus, la structure rigide indéformable 38 comporte avantageusement un couvercle de fermeture 307 agencé au niveau d'une seconde extrémité 56 de la chemise 53.

En outre, un palier 305 et un ou plusieurs joints d'étanchéité dynamique 306 peuvent être interposés entre le couvercle de fermeture 307 et la tige 8. De même, un palier 308 et un ou plusieurs joints d'étanchéité dynamique 309 peuvent également être interposés entre la paroi de fermeture 54 et la tige 8. Un joint d'étanchéité dynamique 311 est quant à lui interposé entre le piston 17 et la face interne cylindrique 57 de la chemise 53.

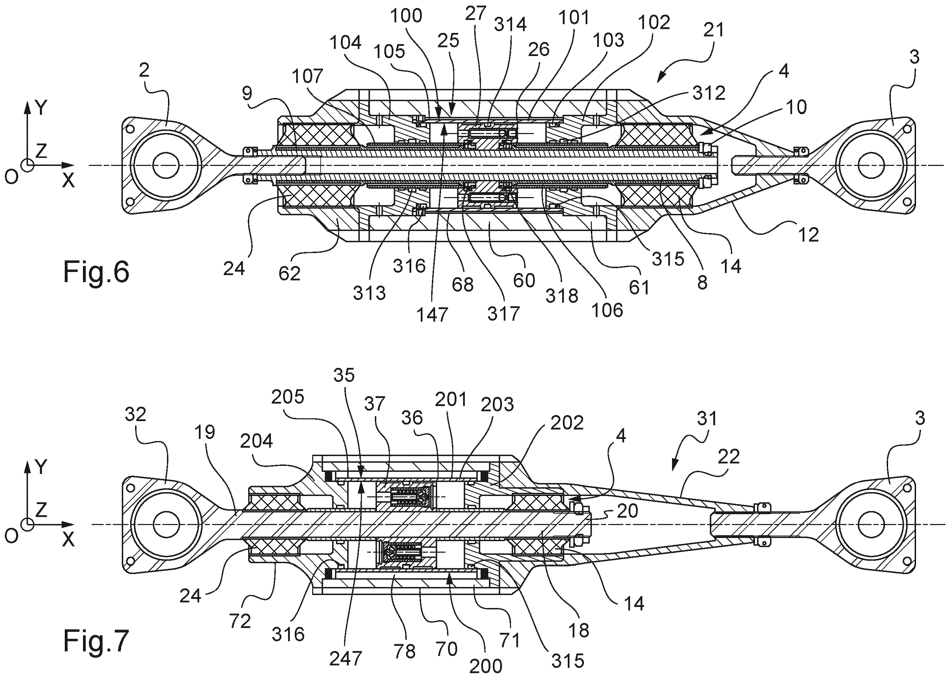

Selon deux exemples de réalisations de l'invention représentés aux figures 6 et 7, l'amortisseur hydroélastique 21, 31 peut comporter une cartouche hydraulique 26, 36 présentant une structure déformable 100, 200 comportant une chemise flottante 101, 201, un premier bouchon 102, 202 agencé au niveau d'une première extrémité 103, 203 de la chemise flottante 101, 201 et un second bouchon 104, 204 agencé au niveau d'une seconde extrémité 105, 205 de la chemise flottante 101, 201

Par suite, la chemise flottante 101, 201 est alors agencée en étant apte à se déplacer respectivement par rapport au premier bouchon 102, 202 et par rapport au second bouchon 104, 204. Le premier bouchon 102, 202 est rendu solidaire du manchon 12, 22 tandis que la chemise flottante 101, 201 présente quant à elle les au moins deux degrés de mobilité par rapport au manchon 12, 22.

En outre, une telle chemise flottante 101, 201 comporte une face interne cylindrique 147, 247 destinée à coopérer de façon réversible avec le piston 27, 37 solidaire de la tige 8, 18 au moyen de joints d'étanchéité dynamique.

Ainsi, selon un troisième exemple de réalisation de l'invention tel que représenté à la figure 6, l'amortisseur hydroélastique 21 peut comporter deux bagues flottantes 106, 107 agencées coaxialement sur l'axe longitudinal OX de part et d'autre du piston 27. Ainsi, une première bague flottante 106 est alors interposée entre la tige 8 et le premier bouchon 102 tandis qu'une seconde bague flottante 107 est interposée entre la tige 8 et le second bouchon 104.

En outre, un ou plusieurs joints d'étanchéité dynamique 312 peuvent être interposés entre le premier bouchon 102 et la tige 8. De même, un ou plusieurs joints d'étanchéité dynamique 313 peuvent également être interposés entre le second bouchon 104 et la tige 8. Un joint d'étanchéité dynamique 314 est quant à lui interposé entre le piston 27 et la face interne de la chemise flottante 101.

Par ailleurs, un ou plusieurs joints d'étanchéité 315 peuvent être interposés entre le premier bouchon 102 et la chemise flottante 101. De même, un ou plusieurs joints d'étanchéité 316 peuvent également être interposés entre le second bouchon 104 et la chemise flottante 101.

En outre, en plus de réaliser une fonction d'étanchéité, ces joints d'étanchéité statique 315, 316 sont déformables et permettent ainsi de conférer les au moins deux degrés de mobilité à la chemise 101 par rapport au manchon 12. La chemise flottante 101 est donc en contact uniquement au niveau de ses extrémités avec les joints d'étanchéité 315, 316. Lorsque la chemise flottante 101 suit le déplacement du piston 27, les joints d'étanchéité 315, 316 ne s'opposent alors pas aux mouvements relatifs de la chemise flottante 101.

Enfin, un ou plusieurs joints d'étanchéité 317 peuvent être interposés entre le piston 27 et la première bague flottante 106. De même, un ou plusieurs joints d'étanchéité 318 peuvent également être interposés entre le piston 27 et la seconde bague flottante 107.

Ainsi, les deux bagues flottantes 106, 107 sont respectivement montées sur un joint d'étanchéité statique 317, 318 et ne touchent aucun autre élément. Chaque joint d'étanchéité 317, 318 a donc également pour fonctions d'une part de réaliser une étanchéité, et d'autre part de réaliser des degrés de mobilité de chaque bague flottante 106, 107 par rapport au piston 27. En outre, de tels degrés de mobilité peuvent comporter un mouvement de translation orienté sensiblement dans un plan parallèle au plan YOZ étant du à la déformation radiale du joint d'étanchéité 317, 318, ainsi que par exemple trois mouvements de rotations car le joint d'étanchéité 317, 318 peut se comporter comme une liaison de type rotule entre le piston 27 et chaque bague flottante 106, 107.

Selon un quatrième exemple de réalisation de l'invention tel que représenté à la figure 7, l'amortisseur hydroélastique 31 peut comporter une tige 18 formant un ensemble monolithique avec le premier organe de liaison 32.

Le premier bouchon 202 peut comporter un alésage apte à loger le premier moyen élastique 14 qui est alors interposé entre d'une part la seconde extrémité 20 de la tige 18 et d'autre part le premier bouchon 202.

De même, le second bouchon 204 peut également comporter un alésage apte à loger le second moyen élastique 24 qui est alors interposé entre d'une part la première extrémité 19 de la tige 18 et d'autre part le second bouchon 204.

Comme précédemment, les joints d'étanchéité statique 315, 316 sont déformables et permettent ainsi de conférer les au moins deux degrés de mobilité à la chemise 201 par rapport au manchon 22.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Amortisseur hydroélastique (1, 11, 21, 31) muni d'un premier organe de liaison (2, 32) et d'un second organe de liaison (3) aptes à relier mécaniquement ledit amortisseur hydroélastique (1, 11, 21, 31) respectivement à un premier organe mécanique (503) et à un second organe mécanique (504), ledit amortisseur hydroélastique (1, 11, 21, 31) comportant un organe élastique (4) et un système hydraulique (5, 15, 25, 35), ledit système hydraulique (5, 15, 25, 35) comportant une cartouche hydraulique (6, 16, 26, 36) logeant un fluide hydraulique et un piston (7, 17, 27, 37) solidaire d'une tige (8, 18) mobile en translation par rapport à ladite cartouche hydraulique (6, 16, 26, 36), ladite tige (8, 18) s'étendant longitudinalement d'une première extrémité (9, 19) à une seconde extrémité (10, 20) le long d'un axe longitudinal (OX), ladite première extrémité (9, 19) étant solidarisée avec ledit premier organe de liaison (2, 32) et ladite seconde extrémité (10, 20) émergeant de ladite cartouche hydraulique (6, 16, 26, 36), ladite cartouche hydraulique (6, 16, 26, 36) présentant en tout ou partie au moins deux degrés de mobilité par rapport à un manchon (12, 22) solidaire dudit second organe de liaison (3), lesdits au moins deux degrés de mobilité comportant au moins un degré de mobilité en translation et au moins un degré de mobilité en rotation,
**caractérisé en ce que** ledit amortisseur hydroélastique (1, 11, 21, 31) comporte un fourreau (40, 50, 60, 70) présentant une première extrémité (41, 51, 61, 71) solidaire dudit manchon (12, 22), ledit fourreau (40, 50, 60, 70) étant agencé en recouvrement de ladite cartouche hydraulique (6, 16, 26, 36) et **en ce que** ledit organe élastique (4) comporte d'une part un premier moyen élastique (14) interposé entre ladite seconde extrémité (10, 20) de ladite tige (8, 18) et le second organe de liaison (3) et d'autre part un second moyen élastique (24) interposé entre ladite première extrémité (9, 19) de ladite tige (8, 18) et une seconde extrémité (42, 52, 62,72) dudit fourreau (40, 50, 60, 70).

2. Amortisseur hydroélastique (1, 11) selon la revendication 1, **caractérisé en ce que** ledit amortisseur hydroélastique (1, 11) comporte des moyens de butée (13) aptes à empêcher un mouvement relatif de translation pure suivant uniquement ledit axe longitudinal (OX) entre tout ou partie de ladite cartouche hydraulique (6, 16) et ledit manchon (12).

3. Amortisseur hydroélastique (1, 11, 21, 31) selon l'une quelconque des revendications 1 à 2, **caractérisé en ce que** ledit amortisseur hydroélastique (1, 11, 21, 31) présente un interstice (48, 58, 68, 78) séparant ladite cartouche hydraulique (6, 16, 26, 36) dudit fourreau (40, 50, 60, 70), ledit interstice (48, 58, 68, 78) étant rempli avec une huile.

4. Amortisseur hydroélastique (1, 11) selon l'une quelconque des revendications 1 à 3, **caractérisé en ce que** ladite cartouche hydraulique (6, 16) présente une structure rigide indéformable (38) comportant une chemise (43, 53) et une paroi de fermeture (44, 54) agencée au niveau d'une première extrémité (45, 55) de ladite chemise (43, 53), ladite chemise (43, 53) comportant une face interne cylindrique (47, 57) coopérant avec ledit piston (7, 17) solidaire de ladite tige (8).

5. Amortisseur hydroélastique (1) selon la revendication 4, **caractérisé en ce que** ladite structure rigide indéformable (38) comporte un couvercle de fermeture (39) agencé au niveau d'une seconde extrémité (46) de ladite chemise (43).

6. Amortisseur hydroélastique (1) selon l'une quelconque des revendications 4 à 5, **caractérisé en ce que** ledit amortisseur hydroélastique (1) comporte au moins une biellette (80, 81) présentant une première liaison (82) à un degré de liberté en rotation avec ledit manchon (12) suivant un premier axe de rotation (O1Y1) et une seconde liaison (83) à un degré de liberté en rotation avec ladite cartouche hydraulique (6) suivant un second axe de rotation (O2Y2), lesdits premier et second axes de rotation (O1Y1, O2Y2) étant parallèles entre eux et perpendiculaires audit axe longitudinal (OX).

7. Amortisseur hydroélastique (1) selon la revendication 6, **caractérisé en ce que** ladite au moins une biellette (80, 81) comporte une première biellette (80) et une seconde biellette (81) agencées de façon diamétralement opposées de part et d'autre de ladite tige, ledit premier axe de rotation (O1Y1) de ladite première biellette (80) étant confondu avec ledit premier axe de rotation (O1Y1) de ladite seconde biellette (80) et ledit second axe de rotation (O2Y2) de ladite première biellette (80) étant confondu avec ledit second axe de rotation (O2Y2) de ladite seconde biellette (81).

8. Amortisseur hydroélastique (11) selon l'une quelconque des revendications 1 à 4, **caractérisé en ce que** ledit amortisseur hydroélastique (11) comporte au moins un bloc élastomérique cylindrique (90, 91), ledit au moins un bloc élastomérique cylindrique (90, 91) comportant un premier bloc élastomérique cylindrique (90) présentant une première portion cylindrique d'extrémité (92) solidarisée avec ladite première extrémité (51) dudit fourreau (50) et une seconde portion cylindrique d'extrémité (93) solidarisée à une première face d'extrémité (94) de ladite cartouche hydraulique (16), ledit premier bloc élastomérique cylindrique (90) s'étendant longitudinalement entre ladite première portion cylindrique d'extrémité (92) et ladite seconde portion cylindrique d'extrémité (93) le long dudit axe longitudinal (OX).

9. Amortisseur hydroélastique (11) selon la revendication 8, **caractérisé en ce que** ledit au moins un bloc élastomérique cylindrique (90, 91) comporte un second bloc élastomérique cylindrique (91) comportant une troisième portion cylindrique d'extrémité (95) solidarisée avec ladite seconde extrémité (52) dudit fourreau (50) et une quatrième portion cylindrique d'extrémité (96) solidarisée à une seconde face d'extrémité (97) de ladite cartouche hydraulique (16), ledit second bloc élastomérique cylindrique (91) s'étendant longitudinalement entre ladite troisième portion cylindrique d'extrémité (95) et ladite quatrième portion cylindrique d'extrémité (96) le long dudit axe longitudinal (OX).

10. Amortisseur hydroélastique (11) selon l'une quelconque des revendications 8 à 9, **caractérisé en ce que** ledit au moins un bloc élastomérique cylindrique (90, 91) est de type lamifié en comportant une pluralité de plaques (98) agencées parallèlement dans des plans perpendiculaires audit axe longitudinal (OX), lesdites plaques (98) étant séparées les unes des autres par un matériau en élastomère.

11. Amortisseur hydroélastique (21, 31) selon l'une quelconque des revendications 1 à 3, **caractérisé en ce que** ladite cartouche hydraulique (26, 36) présente une structure déformable (100, 200) comportant une chemise flottante (101, 201), un premier bouchon (102, 202) agencé au niveau d'une première extrémité (103, 203) de ladite chemise flottante (101, 201) et un second bouchon (104, 204) agencé au niveau d'une seconde extrémité (105, 205) de ladite chemise flottante (101, 201), ladite chemise flottante (101, 201) étant mobile respectivement par rapport audit premier bouchon (102, 202) et par rapport audit second bouchon (104, 204), ledit premier bouchon (102, 202) étant solidarisé avec ledit manchon (12, 22), ladite chemise flottante (101, 201) présentant lesdits au moins deux degrés de mobilité par rapport audit manchon (12, 22), ladite chemise flottante (101, 201) comportant une face interne cylindrique (147, 247) coopérant avec ledit piston (27, 37) solidaire de ladite tige (8, 18).

12. Amortisseur hydroélastique (21) selon la revendication 11, **caractérisé en ce que** ledit amortisseur hydroélastique (21) comporte deux bagues flottantes (106, 107) agencées coaxialement sur ledit axe longitudinal (OX) de part et d'autre dudit piston (27), une première bague flottante (106) étant interposée entre ladite tige (8) et ledit premier bouchon (102), une seconde bague flottante(107) étant interposée entre ladite tige (8) et ledit second bouchon (104).

13. Rotor (501) pour réaliser une propulsion, voire une sustentation, d'un aéronef (500) dans les airs, **caractérisé en ce que** ledit rotor (501) comporte au moins un amortisseur hydroélastique (1, 11, 21 ,31) selon l'une quelconque des revendications 1 à 12.

14. Aéronef (500), **caractérisé en ce que** ledit aéronef (500) comporte au moins un rotor (501) selon la revendication 13 pour réaliser une propulsion, voire une sustentation, dudit aéronef (500) dans les airs.

## Patentansprüche

1. Hydroelastischer Dämpfer (1, 11, 21, 31) mit einem ersten Verbindungsglied (2, 32) und einem zweiten Verbindungsglied (3), die geeignet sind, den hydroelastischen Dämpfer (1, 11, 21, 31) mechanisch mit einem ersten mechanischen Glied (503) bzw. einem zweiten mechanischen Glied (504) zu verbinden, wobei der hydroelastische Dämpfer (1, 11, 21, 31) ein elastisches Glied (4) und ein Hydrauliksystem (5, 15, 25, 35) umfasst, wobei das Hydrauliksystem (5, 15, 25, 35) eine Hydraulikkartusche (6, 16, 26, 36), die ein Hydraulikfluid enthält, und einen Kolben (7, 17, 27, 37) umfasst, der fest mit einer in Bezug auf die Hydraulikkartusche (6, 16, 26, 36) translatorisch beweglichen Stange (8, 18) verbunden ist, wobei sich die Stange (8, 18) in Längsrichtung von einem ersten Ende (9, 19) zu einem zweiten Ende (10, 20) entlang einer Längsachse (OX) erstreckt, wobei das erste Ende (9, 19) fest mit dem ersten Verbindungsglied (2, 32) verbunden ist und das zweite Ende (10, 20) aus der Hydraulikkartusche (6, 16, 26, 36) vorsteht, wobei die Hydraulikkartusche (6, 16, 26, 36) ganz oder teilweise mindestens zwei Bewegungsfreiheitsgrade in Bezug auf eine Muffe (12, 22) aufweist, die mit dem zweiten Verbindungsglied (3) fest verbunden ist, wobei die mindestens zwei Bewegungsfreiheitsgrade mindestens einen Translationsfreiheitsgrad und mindestens einen Rotationsfreiheitsgrad umfassen,
**dadurch gekennzeichnet, dass** der hydroelastische Dämpfer (1, 11, 21, 31) eine Hülse (40, 50, 60, 70) umfasst, von der ein erstes Ende (41, 51, 61, 71) mit der Muffe (12, 22) fest verbunden ist, wobei die Hülse (40, 50, 60, 70) die Hydraulikkartusche (6, 16, 26, 36) überdeckend angeordnet ist, und dass das elastische Glied (4) einerseits ein erstes elastisches Mittel (14), das zwischen dem zweiten Ende (10, 20) der Stange (8, 18) und dem zweiten Verbindungsglied (3) eingefügt ist, und andererseits ein zweites elastisches Mittel (24) umfasst, das zwischen dem ersten Ende (9, 19) der Stange (8, 18) und einem zweiten Ende (42, 52, 62, 72) der Hülse (40, 50, 60, 70) eingefügt ist.

2. Hydroelastischer Dämpfer (1, 11) nach Anspruch 1, **dadurch gekennzeichnet, dass** der hydroelastische Dämpfer (1, 11) Anschlagmittel (13) aufweist, die geeignet sind, eine rein translatorische Relativbewegung nur entlang der Längsachse (OX) zwischen der gesamten oder einem Teil der Hydraulikkartusche (6, 16) und der Muffe (12) zu verhindern.

3. Hydroelastischer Dämpfer (1, 11, 21, 31) nach einem der Ansprüche 1 bis 2, **dadurch gekennzeichnet, dass** der hydroelastische Dämpfer (1, 11, 21, 31) einen Spalt (48, 58, 68, 78) aufweist, der die Hydraulikkartusche (6, 16, 26, 36) von der Hülse (40, 50, 60, 70) trennt, wobei der Spalt (48, 58, 68, 78) mit einem Öl gefüllt ist.

4. Hydroelastischer Dämpfer (1, 11) nach einem der Ansprüche 1 bis 3, **dadurch gekennzeichnet, dass** die Hydraulikkartusche (6, 16) eine starre, nicht verformbare Struktur (38) aufweist, die einen Mantel (43, 53) und eine Verschlusswand (44, 54) umfasst, die an einem ersten Ende (45, 55) des Mantels (43, 53) angeordnet ist, wobei der Mantel (43, 53) eine zylindrische Innenfläche (47, 57) umfasst, die mit dem fest mit der Stange (8) verbundenen Kolben (7, 17) zusammenwirkt.

5. Hydroelastischer Dämpfer (1) nach Anspruch 4, **dadurch gekennzeichnet, dass** die starre, nicht verformbare Struktur (38) einen Verschlussdeckel (39) aufweist, der an einem zweiten Ende (46) des Mantels (43) angeordnet ist.

6. Hydroelastischer Dämpfer (1) nach einem der Ansprüche 4 bis 5, **dadurch gekennzeichnet, dass** der hydroelastische Dämpfer (1) mindestens einen Pleuel (80, 81) aufweist, der eine erste Verbindung (82) mit einem Rotationsfreiheitsgrad mit der Muffe (12) entlang einer ersten Rotationsachse (O1Y1) und eine zweite Verbindung (83) mit einem Rotationsfreiheitsgrad mit der Hydraulickartusche (6) entlang einer zweiten Rotationsachse (O2Y2) aufweist, wobei die erste und die zweite Rotationsachse (O1Y1, O2Y2) parallel zueinander und senkrecht zur Längsachse (OX) sind.

7. Hydroelastischer Dämpfer (1) nach Anspruch 6, **dadurch gekennzeichnet, dass** der mindestens eine Pleuel (80, 81) einen ersten Pleuel (80) und einen zweiten Pleuel (81) umfasst, die diametral gegenüberliegend auf beiden Seiten der Stange angeordnet sind, wobei die erste Drehachse (O1Y1) des ersten Pleuels (80) mit der ersten Drehachse (O1Y1) des zweiten Pleuels (80) zusammenfällt und die zweite Drehachse (O2Y2) des ersten Pleuels (80) mit der zweiten Drehachse (O2Y2) des zweiten Pleuels (81) zusammenfällt.

8. Hydroelastischer Dämpfer (11) nach einem der Ansprüche 1 bis 4, **dadurch gekennzeichnet, dass** der hydroelastische Dämpfer (11) mindestens einen zylindrischen Elastomerblock (90, 91) aufweist, wobei der mindestens eine zylindrische Elastomerblock (90, 91) einen ersten zylindrischen Elastomerblock (90) mit einem ersten zylindrischen Endabschnitt (92), der fest mit dem ersten Ende (51) der Hülse (50) verbunden ist, und einem zweiten zylindrischen Endabschnitt (93), der fest mit einer ersten Endfläche (94) der Hydraulikkartusche (16) verbunden ist, umfasst, wobei sich der erste zylindrische Elastomerblock (90) in Längsrichtung zwischen dem ersten zylindrischen Endabschnitt (92) und dem zweiten zylindrischen Endabschnitt (93) entlang der Längsachse (OX) erstreckt.

9. Hydroelastischer Dämpfer (11) nach Anspruch 8, **dadurch gekennzeichnet, dass** der mindestens eine zylindrische Elastomerblock (90, 91) einen zweiten zylindrischen Elastomerblock (91) umfasst, der einen dritten zylindrischen Endabschnitt (95), der fest mit dem zweiten Ende (52) der Hülse (50) verbunden ist, und einen vierten zylindrischen Endabschnitt (96), der fest mit einer zweiten Endfläche (97) der Hydraulikkartusche (16) verbunden ist, umfasst, wobei sich der zweite zylindrische Elastomerblock (91) in Längsrichtung zwischen dem dritten zylindrischen Endabschnitt (95) und dem vierten zylindrischen Endabschnitt (96) entlang der Längsachse (OX) erstreckt.

10. Hydroelastischer Dämpfer (11) nach einem der Ansprüche 8 bis 9, **dadurch gekennzeichnet, dass** der mindestens eine zylindrische Elastomerblock (90, 91) vom laminierten Typ ist, indem er eine Mehrzahl von Platten (98) umfasst, die parallel in Ebenen senkrecht zur Längsachse (OX) angeordnet sind, wobei die Platten (98) durch ein Elastomermaterial voneinander getrennt sind.

11. Hydroelastischer Dämpfer (21, 31) nach einem der Ansprüche 1 bis 3, **dadurch gekennzeichnet, dass** die Hydraulikkartusche (26, 36) eine verformbare Struktur (100, 200) aufweist, die einen schwimmenden Mantel (101, 201), einen ersten Stopfen (102, 202), der an einem ersten Ende (103, 203) des schwimmenden Mantels (101, 201) angeordnet ist, und einen zweiten Stopfen (104, 204), der an einem zweiten Ende (105, 205) des schwimmenden Mantels (101, 201) angeordnet ist, umfasst, wobei der schwimmende Mantel (101, 201) jeweils in Bezug auf den ersten Stopfen (102, 202) und in Bezug auf den zweiten Stopfen (104, 204) beweglich ist, wobei der erste Stopfen (102, 202) fest mit der Muffe (12, 22) verbunden ist, wobei der schwimmende Mantel (101, 201) die mindestens zwei Bewegungsfreiheitsgrade in Bezug auf die Muffe (12, 22) aufweist, wobei der schwimmende Mantel (101, 201) eine zylindrische Innenfläche (147, 247) aufweist, die mit dem fest mit der Stange (8, 18) verbundenen Kolben (27, 37) zusammenwirkt.

12. Hydroelastischer Dämpfer (21) nach Anspruch 11, **dadurch gekennzeichnet, dass** der hydroelastische Dämpfer (21) zwei schwimmende Ringe (106, 107) umfasst, die koaxial auf der Längsachse (OX) zu beiden Seiten des Kolbens (27) angeordnet sind, wobei ein erster schwimmender Ring (106) zwischen der Stange (8) und dem ersten Stopfen (102) und ein zweiter schwimmender Ring (107) zwischen der Stange (8) und dem zweiten Stopfen (104) angeordnet ist.

13. Rotor (501) zur Realisierung von Vortrieb oder Auftrieb eines Luftfahrzeugs (500) in der Luft, **dadurch gekennzeichnet, dass** der Rotor (501) mindestens einen hydroelastischen Dämpfer (1, 11, 21 ,31) nach einem der Ansprüche 1 bis 12 umfasst.

14. Luftfahrzeug (500), **dadurch gekennzeichnet, dass** das Luftfahrzeug (500) mindestens einen Rotor (501) nach Anspruch 13 aufweist, um Vortrieb oder Auftrieb des Luftfahrzeugs (500) in der Luft zu realisieren.

## Claims

1. Hydroelastic damper (1, 11, 21, 31) equipped with a first linking member (2, 32) and a second linking member (3) capable of mechanically connecting said hydroelastic damper (1, 11, 21, 31) to a first mechanical member (503) and to a second mechanical member (504), respectively, said hydroelastic damper (1, 11, 21, 31) including an elastic member (4) and a hydraulic system (5, 15, 25, 35), said hydraulic system (5, 15, 25, 35) including a hydraulic cartridge (6, 16, 26, 36) containing a hydraulic fluid and a piston (7, 17, 27, 37) integral with a rod (8, 18) movable in translation relative to said hydraulic cartridge (6, 16, 26, 36), said rod (8, 18) extending longitudinally from a first end (9, 19) to a second end (10, 20) along a longitudinal axis (OX), said first end (9, 19) being fixed to said first linking member (2, 32) and said second end (10, 20) emerging from said hydraulic cartridge (6, 16, 26, 36), said hydraulic cartridge (6, 16, 26, 36) having at least two degrees of mobility, partly or entirely, with respect to a sleeve (12, 22) fixed to said second linking member (3), said at least two degrees of mobility including at least one degree of translational mobility and at least one degree of rotational mobility,
**characterized in that** said hydroelastic damper (1, 11, 21, 31) includes a sheath (40, 50, 60, 70) having a first end (41, 51, 61, 71) integral with said sleeve (12, 22), said sheath (40, 50, 60, 70) being arranged to cover said hydraulic cartridge (6, 16, 26, 36), and **in that** said elastic member (4) includes, on the one hand, a first elastic means (14) interposed between said second end (10, 20) of said rod (8, 18) and the second linking member (3) and, on the other hand, a second elastic means (24) interposed between said first end (9, 19) of said rod (8, 18) and a second end (42, 52, 62, 72) of said sheath (40, 50, 60, 70).

2. Hydroelastic damper (1, 11) according to Claim 1, **characterized in that** said hydroelastic damper (1, 11) includes stop means (13) capable of preventing pure relative translational movement only following said longitudinal axis (OX) between all or part of said hydraulic cartridge (6, 16) and said sleeve (12).

3. Hydroelastic damper (1, 11, 21, 31) according to any one of Claims 1 to 2, **characterized in that** said hydroelastic damper (1, 11, 21, 31) has a gap (48, 58, 68, 78) separating said hydraulic cartridge (6, 16, 26, 36) from said sheath (40, 50, 60, 70), said gap (48, 58, 68, 78) being filled with oil.

4. Hydroelastic damper (1, 11) according to any one of Claims 1 to 3, **characterized in that** said hydraulic cartridge (6, 16) has a rigid non-deformable structure (38) comprising a liner (43, 53) and a closing wall (44, 54) arranged at the level of a first end (45, 55) of said liner (43, 53), said liner (43, 53) comprising a cylindrical inner face (47, 57) cooperating with said piston (7, 17) integral with said rod (8).

5. Hydroelastic damper (1) according to Claim 4, **characterized in that** said non-deformable, rigid structure (38) comprises a closing cover (39) arranged at the level of a second end (46) of said liner (43).

6. Hydroelastic damper (1) according to any one of Claims 4 to 5, **characterized in that** said hydroelastic damper (1) comprises at least one connecting rod (80, 81) having a first connection (82) at a rotational degree of freedom with said sleeve (12) following a first axis of rotation (O1Y1) and a second connection (83) at a rotational degree of freedom with said hydraulic cartridge (6) following a second axis of rotation (O2Y2), said first and second axes of rotation (O1Y1, O2Y2) being parallel to one other and perpendicular to said longitudinal axis (OX).

7. Hydroelastic damper (1) according to Claim 6, **characterized in that** said at least one connecting rod (80, 81) comprises a first connecting rod (80) and a second connecting rod (81) arranged so as to be diametrically opposite either side of said rod, said first axis of rotation (O1Y1) of said first connecting rod (80) being coincident with said first axis of rotation (O1Y1) of said second connecting rod (80), and said second axis of rotation (O2Y2) of said first connecting rod (80) being coincident with said second axis of rotation (O2Y2) of said second connecting rod (81).

8. Hydroelastic damper (11) according to any one of Claims 1 to 4, **characterized in that** said hydroelastic damper (11) comprises at least one cylindrical elastomeric block (90, 91), said at least one cylindrical elastomeric block (90, 91) comprising a first cylindrical elastomeric block (90) having a first cylindrical end portion (92) fixed to said first end (51) of said sheath (50) and a second cylindrical end portion (93) fixed to a first end face (94) of said hydraulic cartridge (16), said first cylindrical elastomeric block (90) extending longitudinally between said first cylindrical end portion (92) and said second cylindrical end portion (93) along said longitudinal axis (OX).

9. Hydroelastic damper (11) according to Claim 8, **characterized in that** said at least one cylindrical elastomeric block (90, 91) comprises a second cylindrical elastomeric block (91) having a third cylindrical end portion (95) fixed to said second end (52) of said sheath (50) and a fourth cylindrical end portion (96) fixed to a second end face (97) of said hydraulic cartridge (16), said second cylindrical elastomeric block (91) extending longitudinally between said third cylindrical end portion (95) and said fourth cylindrical end portion (96) along said longitudinal axis (OX).

10. Hydroelastic damper (11) according to any one of Claims 8 to 9, **characterized in that** said at least one cylindrical elastomeric block (90, 91) is of a laminated type, comprising a plurality of plates (98) arranged in parallel in planes perpendicular to said longitudinal axis (OX), said plates (98) being separated from one other by an elastomeric material.

11. Hydroelastic damper (21, 31) according to any one of Claims 1 to 3, **characterized in that** said hydraulic cartridge (26, 36) has a deformable structure (100, 200) comprising a floating liner (101, 201), a first plug (102, 202) arranged at the level of a first end (103, 203) of said floating liner (101, 201), and a second plug (104, 204) arranged at the level of a second end (105, 205) of said floating liner (101, 201), said floating liner (101, 201) being movable relative to said first plug (102, 202) and relative to said second plug (104, 204), respectively, said first plug (102, 202) being fixed to said sleeve (12, 22), said floating liner (101, 201) having said at least two degrees of mobility relative to said sleeve (12, 22), said floating liner (101, 201) having a cylindrical inner face (147, 247) cooperating with said piston (27, 37) integral with said rod (8, 18).

12. Hydroelastic damper (21) according to Claim 11, **characterized in that** said hydroelastic damper (21) comprises two floating rings (106, 107) arranged coaxially on said longitudinal axis (OX) on either side of said piston (27), a first floating ring (106) being interposed between said rod (8) and said first plug (102), and a second floating ring (107) being interposed between said rod (8) and said second plug (104).

13. Rotor (501) for providing propulsion or lift to an aircraft (500) in the air, **characterized in that** said rotor (501) comprises at least one hydroelastic damper (1, 11, 21, 31) according to any one of Claims 1 to 12.

14. Aircraft (500), **characterized in that** said aircraft (500) comprises at least one rotor (501) according to Claim 13 for providing propulsion or lift to said aircraft (500) in the air.
